# EUROPEAN PATENT APPLICATION

(11) **EP 1 030 415 A2**
(43) Date of publication of application: **23.08.2000**
(21) Application number: 00301255.6
(22) Date of filing: 17.02.2000
(51) Int. Cl.: H01S 3/067

(54) **Optical fiber amplifier and method of amplifying an optical signal**

(30) Priority: 17.02.1999 JP 3797799
(71) Applicant: NEC CORPORATION, Tokyo (JP)
(72) Inventor: Akiyama, Koichi, c/o NEC Corporation, Tokyo (JP)
(74) Representative: Moir, Michael Christopher

(57) **Abstract**

A pumping light with a 1480 nm wavelength band is supplied from a laser diode to an erbium-doped optical fiber to excite the erbium ions, whereby the optical fiber amplifies an optical signal with a 1580 nm wavelength band and generates an amplified spontaneous emission light with a 1550 nm wavelength band. The amplified spontaneous emission light is reflected to the erbium-doped optical fiber, whereby the amplified spontaneous emission light re-excites erbium ions doped in the optical fiber.

## Description

### BACKGROUND OF THE INVENTION

### 1. Field of the Invention

The present invention relates to an optical fiber amplifier and a method of amplifying an optical signal, and more particularly to an optical fiber amplifier and a method thereof capable of effectively amplifying an optical signal.

### 2. Description of the Related Art

An erbium doped optical fiber amplifier is known as a conventional optical fiber amplifier. This conventional optical fiber amplifier is used for a wavelength division multiplex (WDM) communication system, wherein an optical signal with a wavelength band of 1550 nm (hereinafter referred to as the "1550 nm band optical signal") is transmitted. Recently, in wavelength division multiplex communication systems use of an optical signal with a wavelength band of 1580 nm (hereinafter referred to as the "1580 nm band optical signal") has been considered to realize high definition of a transmission capacity. In this connection, the 1550 nm wavelength band refers to the wavelength band width of 1530 to 1560 nm, and the 1580 nm wavelength band refers to the wavelength band width of 1570 to 1605 nm.

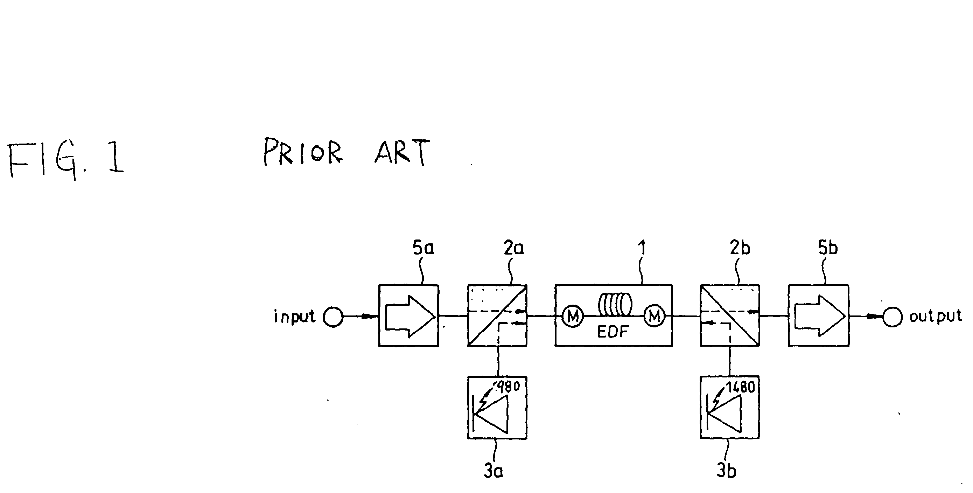

The structure of the conventional optical fiber amplifier is shown in FIG. 1. In FIG. 1, the optical fiber amplifier includes an EDF (erbium-doped fiber) 1, WDM (wavelength division multiplex) couplers 2a and 2b, LD (laser diode) pumping light sources 3a and 3b and optical isolators 5a and 5b. These elements are connected in the order of the optical isolator 5a, the WDM coupler 2a, the EDF 1, the WDM coupler 2b and the optical isolator 5b. Also, the LD pumping light sources 3a and 3b are connected to the WDM couplers 2a and 2b, respectively.

Each of the LD pumping light sources 3a and 3b is a high power semiconductor laser diode for generating a pumping light to excite erbium ions doped in the EDF 1. Each of the optical isolators 5a and 5b causes light to pass in only one direction, and is arranged in order to remove an influence of a reflection of the optical signal. Each of the WDM couplers 2a and 2b synthesizes light having different wavelengths and divides the light having different wavelengths into the respective optical signal.

The optical signal passed through the optical isolator 5a is synthesized with the pumping light output from the LD pumping light source 3a by the WDM coupler 2a, and is then input to the EDF 1. Moreover, the pumping light supplied from the LD light source 3b is input to the EDF 1 though the WDM coupler 2b. The EDF 1 amplifies the input optical signal by using the input pumping light supplied from the LD light sources 3a and 3b, and outputs the amplified optical signal to the WDM coupler 2b.

The WDM coupler 2b separates the amplified optical signal from the pumping light supplied from the LD light source 3b to output it to the outside through the optical isolator 5b. The wavelength of the pumping light output from the LD light source 3a is substantially equal to 980 nm, and the wavelength of the pumping light output from the LD light source 3b is substantially equal to 1480 nm.

For the amplification of the 1580 nm band optical signal in the conventional optical fiber amplifier, similarly to the amplification of the 1550 nm band optical signal based on excitation by the 980 nm band pumping light and excitation by the 1480 nm band pumping light, stimulated emission of erbium ions in the EDF 1 from the energy level ⁴I13/2 to the energy level ⁴I15/2 is utilized. Moreover, in the amplification of the 1580 nm band optical signal, the ASE (Amplified Spontaneous Emission) light with a 1550 nm band is generated based on excitation by the 1480 nm band pumping light and excitation by the 980 nm band pumping light. However, in the conventional optical fiber amplifier, since the ASE light is not effectively used for amplification of the 1580 nm band optical signal , the power of the 980 nm band and 1480 nm band pumping light needs to be high.

Moreover, the conventional optical fiber amplifier for amplifying the 1580 nm band optical signal needs a longer erbium doped fiber in contrast to that for amplifying the 1550 nm band optical signal due to low excitation efficiency.

### SUMMARY OF THE INVENTION

It is therefore an object of the preferred embodiments of the present invention to provide an optical fiber amplifier and a method of amplifying an optical signal capable of effectively amplifying an optical signal with a wavelength band of 1580 nm.

Another object of the preferred embodiments of the present invention is to provide an optical fiber amplifier and a method of amplifying an optical signal capable of effectively amplifying an optical signal using pumping light at low power.

An optical fiber amplifier according to an embodiment of the present invention comprises an optical fiber including a rare earth element, a light source for supplying pumping light to the optical fiber to excite the rare earth element, whereby the optical fiber amplifies an optical signal and generates an amplified spontaneous emission light, and a reflector for reflecting the amplified spontaneous emission light to the optical fiber, whereby the amplified spontaneous emission light excites the rare earth element included in the optical fiber.

Another optical fiber amplifier according to an embodiment of the present invention comprises an optical fiber including a rare earth element, a light source for supplying pumping light to the optical fiber to excite the rare earth element, whereby the optical fiber amplifies an optical signal and generates an amplified spontaneous emission light, and a circulator for circulating the amplified spontaneous emission light, whereby the amplified spontaneous emission light is supplied to the optical fiber to re-excite the rare earth element included in the optical fiber.

A method, according to an embodiment of the present invention, of amplifying an optical signal comprises supplying pumping light to an optical fiber in which a rare earth element is doped to excite the rare earth element, whereby the optical fiber amplifies an optical signal and generates an amplified spontaneous emission light, and reflecting the amplified spontaneous emission light to the optical fiber, whereby the amplified spontaneous emission light excites the rare earth element included in the optical fiber.

Another method of amplifying an optical signal comprises supplying pumping light to an optical fiber in which a rare earth element is doped to excite the rare earth element, whereby the optical fiber amplifies an optical signal and generates an amplified spontaneous emission light, and circulating the amplified spontaneous emission light, whereby supplying the amplified spontaneous emission light to the optical fiber to reexcite the rare earth element.

### BRIEF DESCRIPTION OF THE DRAWINGS

Preferred features of the present invention will now be described, by way of example only, with reference to the accompanying drawings, in which:-
FIG. 1 is a block diagram showing a structure of a conventional optical fiber amplifier.
FIG. 2 is a block diagram showing a first embodiment of an optical fiber amplifier according to the present invention.
FIG. 3 is a block diagram showing a more detailed view of the first embodiment of an optical fiber amplifier according to the present invention.
FIG. 4 is a graph showing reflection characteristics of the fiber grating shown in FIG. 3.
FIG. 5 is a graph showing absorption/stimulated emission cross section of erbium ions in the erbium-doped optical fiber shown in FIG. 3.
FIG. 6 is a block diagram showing a second embodiment of an optical fiber amplifier according to the present invention.
FIG. 7 is a block diagram showing a third embodiment of an optical fiber amplifier according to the present invention.
FIG. 8 is a view showing a structure of the directional coupler type fiber grating shown in FIG. 7.

### DETAILED DESCRIPTION OF THE PREFERRED EMBODIMENTS

Now, preferred embodiments according to the present invention will be discussed referring to the drawings.

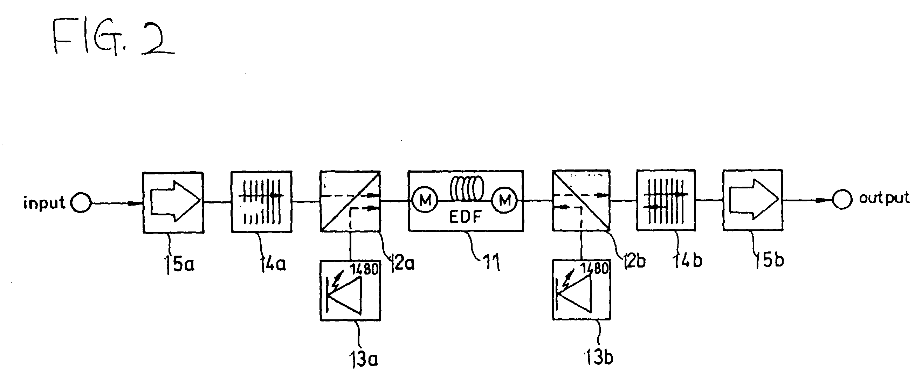

An optical fiber amplifier for amplifying an optical signal with a wavelength band of 1580 nm (hereinafter, referred to as the "1580 nm band optical signal") according to a first embodiment of the present invention is shown in FIG. 2. In FIG. 2, an optical fiber amplifier includes an EDF (erbium-doped fiber) 11, WDM (wavelength division multiplex) couplers 12a and 12b, LD (laser diode) pumping light sources 13a and 13b, fiber gratings 14a and 14b, and optical isolators 15a and 15b.

Each of elements included in this optical fiber amplifier are arranged in the order of the optical isolator 15a, the fiber grating 14a, the WDM coupler 12a, the EDF 11, the WDM coupler 12b, the fiber grating 14b and the optical isolation 15b. In this connection, the LD pumping light sources 13a and 13b are connected to the WDM couplers 12a and 12b, respectively.

Each of the LD pumping light sources 13a and 13b is a high-power semiconductor laser diode for generating a pumping light to excite an rare earth element such as erbium ions doped in the EDF 11. In the amplification of an optical signal with wavelength band of 1550 nm (hereinafter, referred to as the "1550 nm band optical signal"), an InGaAs laser diode with about a 980 nm oscillation wavelength is employed as the LD pumping light source. However, in the amplification of an optical signal with wavelength band of 1580 nm (hereinafter, referred to as the "1580 nm band optical signal"), quantum efficiency of an amplified spontaneous emission (ASE) light with a 1550 nm wavelength band in excitation by a pumping light at about 1480 nm wavelength band is higher than an ASE light in the excitation by a pumping light with about a 980 nm wavelength band. Thus, in this embodiment, an InGaAsP/InP laser diode with about a 1480 nm oscillation wavelength is employed as the LD pumping light sources 13a and 13b. However, the InGaAs laser diode with 980 nm oscillation wavelength can be employed in the present invention.

A fiber grating generally selectively reflects only light having a specific wavelength. The refractive index of a core of an optical fiber constituting the fiber grating is changed at fixed intervals. In this embodiment, a chirped grating is used as the fiber gratings 14a and 14b to enhance the reflection characteristics of the ASE light. In the chirped gratings, the grating interval is not fixed, but is gradually changed, whereby the wavelength of light to be reflected can be continuously changed.

Each of the optical isolators 15a and 15b transmits therethrough the 1580 nm band optical signal only in one direction and is arranged in order to remove the influence of the reflection of any light including the 1580 nm band optical signal. Each of the WDM couplers 12a and 12b synthesizes light beams having different wavelengths. In this embodiment, the WDM coupler 12a synthesizes the 1480 nm band pumping light output from the LD pumping light source 13a with the 1580 nm band optical signal. The WDM coupler 12b separates the 1480 nm pumping light output from the LD pumping light source 13b from the ASE light generated in the EDF 11 and the 1580 nm band optical signal passed through the EDF 11, thereby outputting the resultant 1580 nm band optical signal.

The 1580 nm band optical signal passes through the optical isolator 15a and the fiber grating 14a. Then, the 1580 nm band optical signal is synthesized with the 1480 nm pumping light output from the LD pumping light source 13a, by the WDM coupler 12a, and is then input to the EDF 11. The 1580 nm band optical signal passed through the EDF 11 is separated from the 1480 nm pumping light output from the LD pumping light source 13b, by the WDM coupler 12b to be output to the outside.

The erbium ions in the EDF 11 are doped to transition from a ground state to a excited state by the 1480 nm band pumping light, whereby the ASE light with 1550 nm band is generated by the amplified spontaneous emission based on transition of the energy level of the erbium ions from ⁴I13/2 to ⁴I15/2. Then, the ASE light is absorbed so that the erbium ions transition to the excited state again and the 1580 nm band optical signal is optically amplified by a stimulated emission.

The fiber gratings 14a and 14b each having reflection characteristics for the 1550 nm wavelength band are respectively arranged before the WDM coupler 12a preceding the EDF 11 (i.e., at an input stage) and after the WDM coupler 12b following the EDF 11 (i.e., at an output stage), whereby the ASE light which is not used for excitation of erbium ions is not output as an output signal, but is reflected towards the WDM couplers 12a and 12b sides by the fiber gratings 14a and 14b, respectively, to be made incident onto the EDF 11 again. Then, the incident ASE light is used for amplification of the 1580 nm band optical signal in the EDF 11. The amplified 1580 nm band optical signal passes through the fiber grating 14b and the optical isolator 15b to be output to the outside.

The fiber gratings 14a and 14b are arranged before and after the EDF 11, respectively ,whereby the ASE light generated in the EDF 11 and not used for excitation of erbium ions is not output together with the 1580 nm band optical signal, but is returned back to the EDF 11. As a result, the ASE light acts as an aid for the 1480 nm band pumping light emitted from the LD pumping light sources 13a and 13b to enhance gain efficiency in the amplification of the 1580 nm band optical signal.

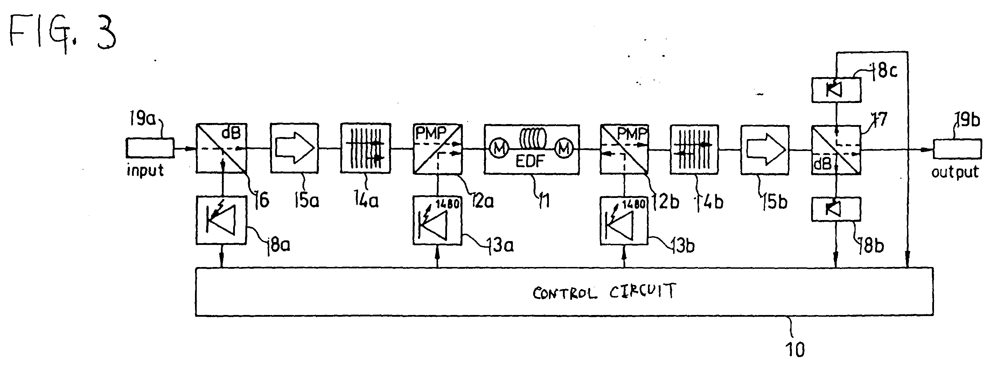

Referring to FIG. 3, an optical fiber amplifier according to the first embodiment of the present invention will be discussed in more detail. In FIG. 3, an optical connector 19a is connected to a 1x2 branch coupler 16 through an optical fiber, and a PD (photo diode) 18a for converting a received light into an electrical current signal is connected to one branch side of the 1x2 branch coupler 16.

The constituent elements are connected in the order of an optical isolator 15a, a fiber grating 14a, a WDM coupler 12a, an EDF 11, a WDM coupler 12b, a fiber grating 14b, an optical isolator 15b, a 2x2 branch coupler 17 and an optical connector 19b, whereby these elements are connected to the other branch side of the 1x2 branch coupler 16.

LD pumping light sources 13a and 13b are connected to the WDM couplers 12a and 12b, respectively, and PDs 18b and 18c are connected to the branch sides of the 2x2 branch coupler 17, respectively. In addition, the LD pumping light sources 13a and 13b, and the PDs 18a to 18c are controlled by a control circuit 10.

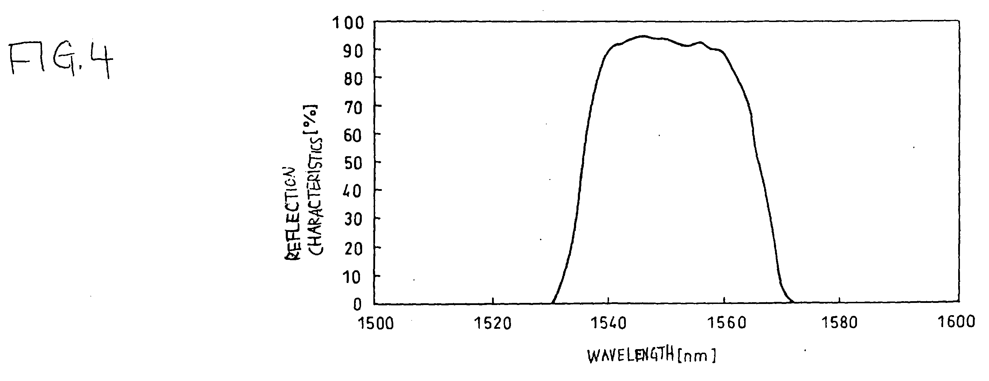

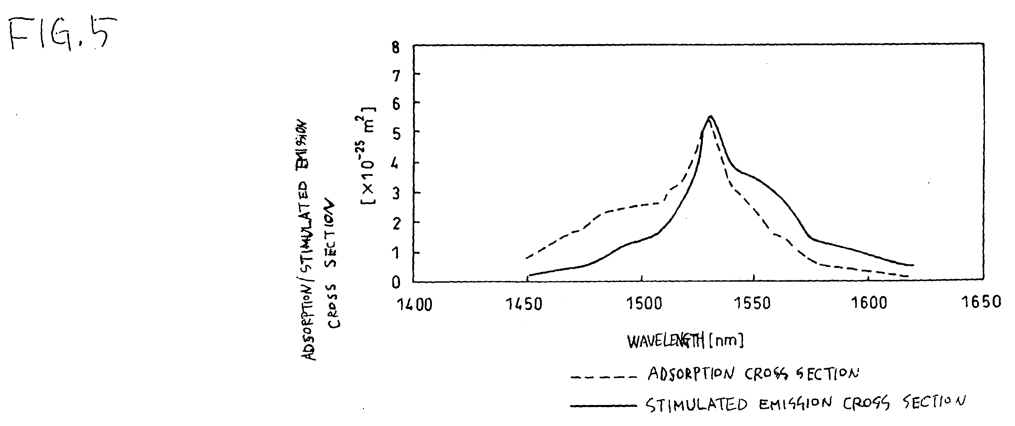

FIG. 4 is a graphical representation showing reflection characteristics of each of the fiber gratings 14a and 14b shown in FIG. 3, and FIG. 5 is a graphical representation showing absorption and stimulated emission cross-sections of erbium ions doped in the EDF 11 shown in FIG. 3.

As shown in FIG. 4, a fiber grating is employed, as the fiber gratings 14a and 14b, which has about a 90% reflection characteristic in the wavelength band from 1540 nm to 1560 nm.

The 1580 nm band optical signal input through the optical connector 19a is branched by the 1x2 branch coupler 16, and the branched 1560 nm band optical signal that is a 5% reflection of the input signal, is made incident onto the PD 18a for monitoring the input power of the 1580 nm band optical signal. In the control circuit 10, an electrical current signal, indicative of the input power of the 1580 nm band optical signal, output from the PD 18a is converted into a voltage signal which is in turn compared with a reference voltage set on the basis of information from the outside in order to detect an interrupt in the input of the 1580 nm band optical signal and monitor reduction of the input power of the 1580 nm band optical signal.

The branched 1580 nm band optical signal that is 95% of the input signal and is passed by the 1x2 branch coupler 16 passes to the fiber grating 14a through the optical isolator 15a. The passed 1580 nm band optical signal is synthesized with the 1480 nm band pumping light output from the LD pumping light source 3a by the WDM coupler 12a and then is input to the EDF 11. Also, the 1480 nm band pumping light output from the LD pumping light source 13b is input to the EDF 11 via the WDM coupler 12b.

Erbium ions doped in the EDF 11 transition from the ground state to the excited state by inputting the 1480 nm band pumping light and then the ASE light with a 1550 nm band is generated by spontaneous emission based on the energy level transition of erbium ions from ⁴I13/2 to ⁴I15/2. Then, the ASE light is absorbed so that erbium ions transition to the excited state again and the 1580 nm band optical signal is optically amplified by stimulated emission.

As shown in FIG. 5, since the stimulated emission cross section for the 1580 nm band signal is smaller than that for 1550 nm band signal, the gain per unit length of the EDF 11 becomes small when the 1580 nm band optical signal is amplified. Therefore, in the conventional optical fiber amplifier, the length of the EDF 11 when amplifying the 1580 nm band optical signal needs to be longer than the length needed when amplifying the 1550 nm band optical signal. Moreover, when excitation power by a pumping light is low, the ASE light does not effectively re-excite erbium ions doped in the EDF 11 in the conventional optical fiber amplifier, and hence, the amplification of the 1580 nm band optical signal is not effectively realized.

In this embodiment, the fiber gratings 14a and 14b each have reflection characteristics for light with a 1550 nm wavelength bands, and are arranged before the WDM coupler 12a preceding the EDF 11 and after the WDM coupler 12b following the EDF 11, respectively. As a result, the ASE light which is not used for re-excitation of erbium ions is not output as an output signal, but is reflected towards the WDM couplers 12a and 12b, respectively, by the fiber gratings 14a and 14b to be made incident onto the EDF 11 again. Then, the incident ASE light is effectively used for amplification of the 1580 nm band optical signal in the EDF 11.

The 1580 nm band optical signal amplified by the EDF 11 passes through the fiber grating 14b and the optical isolator 15b to be branched by the 2x2 branch coupler 17. The branched 1580 nm band optical signal that is 5% of the input signal is made incident onto the PD 18b for monitoring the output power of the amplified 1580 nm band optical signal. In the control circuit 10, a current signal indicative of the monitored power of the 1580 nm band optical signal output from the PD 18b is converted into a voltage signal. The voltage signal is in turn compared with a reference voltage, and then drive currents for the LD pumping light sources 13a and 13b are controlled based on the compared result in such a way that the 1580 nm band optical signal is output at a desired power level. As a result, the output power of the 1580 nm band optical signal is fixed at the desired power level.

In addition, in the case where no constituent element is connected to the optical connector 19b on the output side, it is expected that the amplified 1580 nm band optical signal will have an extremely high output power, and hence this is very dangerous condition. For this reason, in that case, reflection of the 1580 nm band optical signal from the optical connector 19b is monitored by the PD 18c so that an alarm can be triggered by the control circuit 11 announcing the dangerous condition. The optical connector 19b has a reflection member to reflect the 1580 nm band optical signal when no constituent element is connected to the optical connector 19b on the output side.

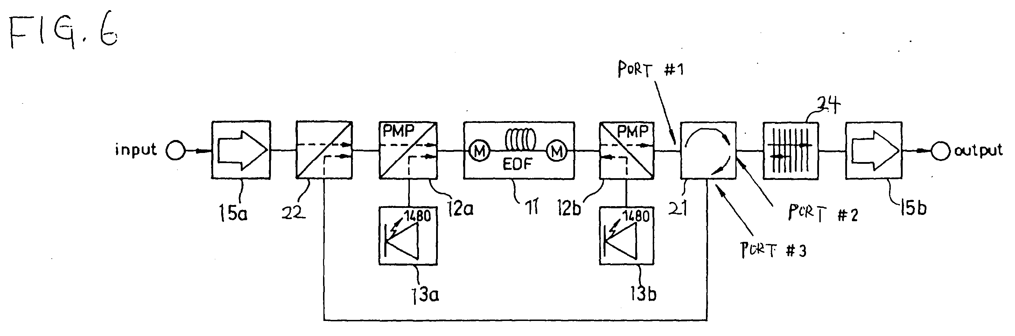

Next, an optical fiber amplifier according to a second embodiment of the present invention will be discussed with reference to FIG. 6.

In this embodiment, the optical fiber amplifier includes an EDF 11, WDM couplers 12a and 12b, LD pumping light sources 13a and 13b in the 1480 nm band, a fiber grating 24, optical isolators 15a and 15b, an optical circulator 21, and a 1550nm/1580nm WDM coupler 22. In this connection, description of the portions of this embodiment that are the same as the first embodiment shown in FIG. 3 are omitted here for the sake of simplicity.

The optical circulator 21 has three I/O terminals, wherein light input to a port # 1 is output from a port # 2 through the optical circulator 21, and light input to the port # 2 is output from a port # 3 through the optical circulator 21.

The ASE light with the 1550 nm band generated in the EDF 11 by the LD pumping light sources 13a and 13b passes through the optical circulator 21 from the port # 1 to the port # 2, thereby being input to the fiber grating 24, and then the ASE light is reflected by the fiber grating 24 and passes through the optical circulator 21 from the port # 2 to the port # 3.

The 1550nm/1580nm WDM coupler 22 is arranged in order to synthesize the 1580 nm band optical signal with the ASE light of the 1550 nm wavelength band. Thus, the ASE light from the port # 3 of the optical circulator 21 is made incident together with the 1580 nm band optical signal onto the EDF 11 again by the 1550nm/1580nm WDM coupler 22, whereby it is used for amplification of the 1580 nm band optical signal.

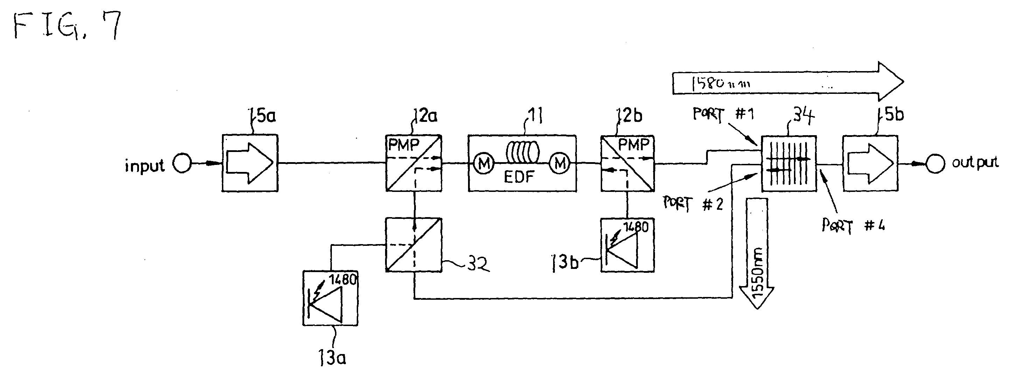

An optical fiber amplifier according to a third embodiment of the present invention will be discussed with reference to FIG. 7. In this connection, description of the portions of this embodiment that are the same as the first embodiment shown in FIG. 3 are omitted here for the sake of simplicity.

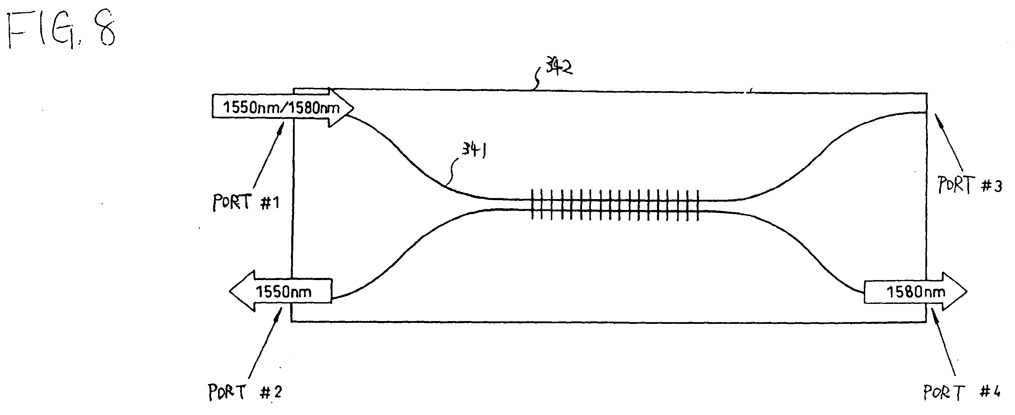

A structure of a directional coupler-type fiber grating 34 employed in Fig. 7, is shown in detail in FIG. 8. In FIG. 8, the structure of the directional coupler-type fiber grating 34 is such that a quartz waveguide 341 is formed so as to be a directional coupler on a silicon substrate 342 and the refractive index of a core portion of a coupling area of the quartz waveguide 341 is changed at fixed intervals in order to reflect the ASE light with the 1550 nm wavelength band. In addition, in the directional coupler type fiber grating 34, optical axes of optical fibers are aligned with those of ports # 1 to 4, and modularization therefor is carried out.

Referring to Fig. 7, when the ASE light generated in the EDF 11 is made incident through the port # 1 of the fiber grating 34, the input ASE light is reflected and output from the port # 2. It then is synthesized with the 1480 nm band pumping light from the LD pumping light source 13a in the WDM coupler 32 to be made incident onto the EDF 11 again to be used for amplification of the 1580 nm band optical signal. When having been made incident through the port # 1 of the fiber grating 34, the 1580 nm band optical signal is output from the port # 4 of the fiber grating 34 therethrough.

The invention may be embodied in other specific forms without departing from the essential characteristics thereof. The present embodiments described here are therefore to be considered in all respects as illustrative and not restrictive, the scope of the invention being indicated by the appended claims rather than by the foregoing description, and all changes which come within the meaning and range of equivalency of the claims are therefore intended to be embraced therein.

Each feature disclosed in this specification (which term includes the claims) and/or shown in the drawings may be incorporated in the invention independently of other disclosed and/or illustrated features.

The text of the abstract filed herewith is repeated here as part of the specification.

A pumping light with a 1480 nm wavelength band is supplied from a laser diode to an erbium-doped optical fiber to excite the erbium ions, whereby the optical fiber amplifies an optical signal with a 1580 nm wavelength band and generates an amplified spontaneous emission light with a 1550 nm wavelength band. The amplified spontaneous emission light is reflected to the erbium-doped optical fiber, whereby the amplified spontaneous emission light re-excites erbium ions doped in the optical fiber.

## Claims

1. An optical fiber amplifier, comprising:
an optical fiber including a rare earth element;
a light source for supplying pumping light to said optical fiber to excite the rare earth element whereby said optical fiber amplifies an optical signal and generates an amplified spontaneous emission light; and
a reflector for reflecting the amplified spontaneous emission light to said optical fiber whereby the amplified spontaneous emission light excites the rare earth element included in said optical fiber.

2. The optical fiber amplifier as claimed in claim 1, the optical fiber having optical input and output terminals, wherein said light source supplies the pumping light to said optical fiber from at least one of the optical signal input and output terminals.

3. The optical fiber amplifier as claimed in claim 1, wherein said reflector is a fiber grating.

4. The optical fiber amplifier as claimed in claim 1, wherein said reflector passes the optical signal and reflects the amplified spontaneous emission light.

5. The optical fiber amplifier as claimed in claim 4, wherein a wavelength of the optical signal is substantially within the range of 1570 nm to 1605 nm and a wavelength of the amplified spontaneous emission light is substantially within the range of 1530 nm to 1560 nm.

6. The optical fiber amplifier as claimed in claim 1, wherein said reflector is a chirped fiber grating.

7. The optical fiber amplifier as claimed in claim 1, wherein said reflector is arranged in at least one of an input stage preceding said optical fiber and an output stage following said optical fiber.

8. The optical fiber amplifier as claimed in claim 7, the optical fiber amplifier further comprising:
a coupler for synthesizing the amplified spontaneous emission light reflected by said reflector at the output stage with the pumping light from said light source, whereby said coupler supplies the amplified spontaneous emission light and the pumping light.

9. The optical fiber amplifier as claimed in claim 1, further comprising an optical isolator for passing the optical signal in only one direction.

10. The optical fiber amplifier as claimed in claim 1, further comprising:
a detector for detecting the power of the optical signal before the optical signal is input to said optical fiber; and
a controller for controlling said light source according to the power detected by said detector.

11. The optical fiber amplifier as claimed in claim 1, further comprising:
a detector for detecting the power of the optical signal output from said optical fiber; and
a controller for controlling said light source according to the power detected by said detector.

12. The optical fiber amplifier as claimed in claim 1, further comprising:
an input connector from which the optical signal is input; and
an output connector from which the optical signal amplified by said optical fiber is output.

13. The optical fiber amplifier as claimed in claim 12, further comprising:
a detector for detecting the power of the optical signal reflected from said output connector; and a controller for controlling said light source according to the power detected by said detector.

14. A method of amplifying an optical signal, comprising:
supplying pumping light to an optical fiber doped with a rare earth element to excite the rare earth element whereby the optical fiber amplifies an optical signal and generates an amplified spontaneous emission light; and
reflecting the amplified spontaneous emission light to the optical fiber, whereby the amplified spontaneous emission light excites the rare earth element doped in the optical fiber.

15. The method as claimed in claim 14, wherein the rare earth element is erbium.

16. The method as claimed in claim 14, wherein the pumping light has a wavelength band of 1480 nm.

17. The method as claimed in claim 14, wherein a wavelength of the optical signal is different from the wavelength of the amplified spontaneous emission light.

18. The method as claimed in claim 17, wherein the wavelength of the optical signal is substantially within the range of 1570 nm to 1605 nm.

19. The method as claimed in claim 18, wherein wavelength of the amplified spontaneous emission light is substantially within the range of 1530 nm to 1560 nm.

20. The method as claimed in claim 14, wherein the pumping light is supplied to the optical fiber from at least one of an optical signal input terminal of the optical fiber and an optical signal output terminal of the optical fiber.

21. The method as claimed in claim 14, further comprising:
detecting a power level of the optical signal before the optical signal is input to the optical fiber; and
controlling the pumping light according to the detected power level.

22. The method as claimed in claim 14, further comprising:
detecting a power level of the optical signal output from the optical fiber; and,
controlling the pumping light according to the detected power level.

23. The method as claimed in claim 14, further comprising:
detecting a power level of the optical signal reflected from an output connector from which the amplified optical signal is output to the outside; and
controlling the pumping light according to the detected power level.

24. An optical fiber amplifier, comprising:
an optical fiber including a rare earth element;
an light source for supplying pumping light to said optical fiber to excite the rare earth element whereby said optical fiber amplifies an optical signal and generates an amplified spontaneous emission light; and, a circulator for circulating the amplified spontaneous emission light thereby supplying the amplified spontaneous emission light to said optical fiber to re-excite the rare earth element included in said optical fiber.

25. The optical fiber amplifier as claimed in claim 1 or 24, wherein the rare earth element is erbium.

26. The optical fiber amplifier as claimed in claim 1 or 24, wherein said light source is a laser diode.

27. The optical fiber amplifier as claimed in claim 1 or 24, wherein the pumping light has a wavelength band of 1480 nm.

28. The optical fiber amplifier as claimed in claim 1 or 24, wherein the wavelength of the optical signal is different from the wavelength of the amplified spontaneous emission light.

29. The optical fiber amplifier as claimed in claim 1 or 24, wherein the wavelength of the optical signal is substantially within the range of 1570 nm to 1605 nm.

30. The optical fiber amplifier as claimed in claim 29, wherein the wavelength of the amplified spontaneous emission light is substantially within the range of 1530 nm to 1560 nm.

31. The optical fiber amplifier as claimed in claim 1, wherein said light source supplies the pumping light to said optical fiber from at least one of an optical signal input terminal of said optical fiber and an optical signal output terminal of said optical fiber.

32. A method of amplifying an optical signal, comprising:
supplying pumping light to an optical fiber, doped with a rare earth element, to excite the rare earth element, whereby the optical fiber amplifies an optical signal and generates an amplified spontaneous emission light; and,
circulating the amplified spontaneous emission light thereby supplying the amplified spontaneous emission light to the optical fiber to re-excite the rare earth element.
